(19)

Europäisches
Patentamt
European
Patent Office
Office européen
des brevets

(11) **EP 4 353 386 A1**

(12) **EUROPEAN PATENT APPLICATION**

(43) Date of publication:
**17.04.2024 Bulletin 2024/16**

(21) Application number: **22200705.6**

(22) Date of filing: **11.10.2022**

(51) International Patent Classification (IPC):
**B23B 27/16** *(2006.01)*

(52) Cooperative Patent Classification (CPC):
**B23B 27/1625;** B23B 2200/0461; B23B 2200/088;
B23B 2200/165; B23B 2205/04; B23B 2205/16

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Seco Tools AB
737 82 Fagersta (SE)**

(72) Inventor: **Ekdén, Dan
SE-737 82 Fagersta (SE)**

(74) Representative: **Sandvik
Sandvik Intellectual Property AB
811 81 Sandviken (SE)**

(54) **A CUTTING TOOL COMPRISING A CUTTING EDGE AND A METHOD FOR INDEXING SUCH A CUTTING EDGE**

(57) The invention is related to a cutting tool (100) comprising a toolholder body (110), a cutting unit (120), a clamp (160) having a clamping surface (162), and a fastening element (180), wherein the cutting unit (120) is secured in the toolholder body (110) by the fastening element (180) which is adjustable to generate a clamping force acting on the clamp (160) to press the clamping surface (162) toward the cutting unit (120). The cutting unit (120) comprises a circular cutting edge (124) comprising a plurality of cutting edge portions (126).

The cutting tool (100) is configured to be shifted between an operation state and an indexing state by adjusting the fastening element (180) to provide a corresponding clamping force, wherein the cutting tool (100) further comprises a resilient element (190) connecting the clamp (160) with the toolholder body (110), wherein the resilient element (190) is configured to generate a biasing force acting on the clamp (160) to press the clamping surface (162) towards the cutting unit top surface (130), wherein
- in the operation state, the clamping force is larger than the biasing force,
- in the indexing state, the clamping force is smaller than the biasing force.

The invention also relates to a method (200) for indexing the cutting edge (124) in the cutting tool (100).

100

Fig. 1

EP 4 353 386 A1

**Description**

TECHNICAL FIELD

The present invention relates to a cutting tool comprising a cutting edge and a method for indexing such a cutting edge.

BACKGROUND

Within the cutting industry it is common to use a cutting tool comprising a toolholder with at least one replaceable cutting insert, having at least one cutting edge, mounted therein for performing a cutting process. Sometimes a shim is arranged between the cutting insert and the toolholder. It is common to use indexable cutting inserts having a plurality of cutting edges, wherein the cutting insert can be rotated in order to index a new cutting edge as the active cutting edge used in the cutting process. Such cutting inserts are secured to the toolholder by a fastening means such as a clamp or a screw. If a cutting insert having a circular cutting edge is used, a risk that arises is that the cutting edge is indexed a non-optimum amount which has an effect either on the quality of the performed cutting operation if the cutting edge is indexed too little, or on the overall production cost if the cutting edge is indexed too much since the whole cutting edge is not used. The latter is especially a problem where ultra-hard cutting inserts, such as cubic boron nitride cutting inserts, are used since these cutting inserts are expensive ones. Attempts to overcome this problem has been made by providing cutting inserts with recesses in its main surfaces which are configured to interact with a protrusion in the shim in order to guide the operator on how much the cutting edge should be indexed. Such a solution s disclosed in e.g.
DE 10 2009 049 088 A1. Even if such a solution to some extent provides a solution to the problem, the result has not proven to be sufficient since there still is a significant risk that the operator indexes the cutting edge a non-optimum amount.

SUMMARY OF THE INVENTION

It is an object of the present invention to overcome, or at least partly overcome, said problem by introducing a cutting tool comprising a cutting edge and a method for indexing such a cutting edge.
The object of the present invention is achieved by means of a cutting tool comprising:

- a toolholder body;

- a cutting unit;

- a clamp; and

- a fastening element, wherein

the toolholder body comprising a pocket having a bottom support surface, and wherein

the clamp is arranged at the toolholder body and extending at least partly over the pocket, wherein the clamp comprises a clamping surface facing the pocket, and wherein

the cutting unit comprises a cutting insert having a circular cutting edge comprising a plurality of cutting edge portions, wherein

the cutting unit is arranged in the pocket, wherein the cutting unit comprises:

- a cutting unit bottom surface facing the bottom support surface; and

- a cutting unit top surface facing the clamping surface, wherein

the cutting unit comprises a central plane P extending midway between the cutting unit top surface and the cutting unit bottom surface, and wherein

the cutting unit comprises a central axis A extending between the cutting unit top surface and the cutting unit bottom surface normal to the central plane P, wherein

the cutting tool further comprises at least one indexing indication element in form of a protrusion extending toward the cutting unit from

- the clamping surface; or

- the bottom support surface, and wherein
the cutting unit comprises a plurality of cutting unit indexing elements, wherein the cutting unit indexing elements are in the form of

- n recesses arranged in the cutting unit top surface; or

- n recesses arranged in the cutting unit bottom surface, wherein

the distance between two neighboring recesses in the cutting unit top surface or in the cutting unit bottom surface is d in a circumferential direction around the central axis A, wherein n is an integer $\geq 2$, wherein

each of the at least one indexing indication element is in engagement with one of the cutting unit indexing elements, wherein

the cutting unit is secured in the pocket by the fastening element which is adjustable to generate a clamping force acting on the clamp to press the clamping surface toward the cutting unit, wherein

the cutting tool is configured to be shifted between an operation state and an indexing state by adjusting the fastening element to provide a corresponding clamping force, wherein

- in the operation state, the cutting unit is immovably secured in the pocket,

- in the indexing state, the cutting unit is secured in the pocket such that the cutting unit is rotatable relative the bottom support surface in the circumferential direction around the central axis A such that another one of the cutting unit indexing elements can be brought into engagement with the at least one indexing indication element for allowing indexing of the cutting edge portions, wherein the cutting tool further comprises a resilient element connecting the clamp with the toolholder body, wherein the resilient element is configured to generate a biasing force acting on the clamp to press the clamping surface towards the cutting unit top surface, wherein

- in the operation state, the clamping force is larger than the biasing force,

- in the indexing state, the clamping force is smaller than the biasing force.

By providing a resilient element connecting the clamp with the toolholder body, which is configured to generate a biasing force acting on the clamp to press the clamping surface towards the cutting unit top surface, the clamping surface will generate a force pressing the cutting unit towards the bottom support surface during the indexing process. When rotating the cutting unit around the central axis A during the indexing process, the rotation force will force the at least one indexing indication element out of contact with the current cutting unit indexing element and the clamping surface will thereby be pressed upwards, away from the central plane P of the cutting unit. When the cutting unit has been rotated a distance d in the circumferential direction around the central axis A, the at least one indexing element will engage the next cutting unit indexing element in the circumferential direction around the central axis A, which results in that the biasing force generated by the resilient element again will press the clamping surface towards the central plane P. A tactile indication is thereby given to the operator that the cutting edge has been indexed an optimum amount. The risk of the operator performing a non-optimum indexation of the cutting edge is thereby reduced.

A further effect of this feature is that the clamping surface will remain in contact with the cutting unit top surface even when the fastening element is loosened. The cutting unit will thereby be prevented from falling out of the pocket during indexation of the cutting edge, which will simplify the indexing process.

The cutting tool is preferably a metal cutting tool. According to an embodiment, the cutting tool is a turning tool.

According to an embodiment, the resilient element is a spring.

The toolholder body is commonly made of steel.

According to an embodiment, the cutting insert is a cubic boron nitride (CBN) cutting insert, a polycrystalline diamond (PCD) cutting insert, a cemented carbide cutting insert, a cermet cutting insert, or a ceramic cutting insert.

According to an embodiment, the fastening element is a screw or a bolt.

According to an embodiment, the cutting unit indexing elements have a major axis and a minor axis being perpendicular to each other and to the central axis A, wherein the cutting unit indexing element extends a distance $r_1$ in the direction of the major axis and a distance $r_2$ in the direction of the minor axis, wherein $r_1 > r_2$.

By arranging the cutting unit indexing elements as recesses extending different distances in different direction, the contacting force between the cutting unit and the clamp or the toolholder body can be adapted so that a maximum contacting force is generated where the generated cutting forces becomes the highest. A stable mounting of the cutting unit in the pocket is thereby provided.

According to an embodiment, the major axis is oriented in a direction from the central axis A towards the cutting edge.

Due to this orientation of the major axis, a maximum clamping force between the cutting unit and the clamp or toolholder body is generated.

According to an embodiment, the cutting tool comprises a first indexing indication element and a second indexing indication element extending towards the cutting unit from

- the clamping surface, or

- the bottom support surface, wherein

the first indexing indication element is configured to engage a first of the n recesses, and wherein the second indexing indication element is configured to engage a second of the n recesses.

By providing a first and a second indexing indication element, which are engaging a respective cutting unit indexing element, the clamping of the cutting unit in the pocket is improved and an improved stability in the securing of the cutting unit in the pocket is achieved.

According to an embodiment, the cutting unit top surface or the cutting unit bottom surface comprises m recesses arranged between the first recess and the second recess in the circumferential direction around the central axis A, wherein $m = \frac{n-2}{2}$.

Due to this arrangement, a symmetrical engagement between the indexing indication elements and the cutting unit indexing elements is achieved, which results in an improved stability in the securing of the cutting unit in the pocket.

According to an embodiment, the cutting unit bottom surface comprises an indexing interface, and wherein the toolholder body comprises a channel extending from a first opening at a peripheral surface of the toolholder body to a second opening located at the bottom support surface, wherein the indexing interface is accessible from the exterior of the cutting tool via the channel.

By providing the indexing interface in the cutting unit bottom surface, the indexing interface is protected from the harsh environment surrounding the cutting tool when used in a cutting operation. The risk of the indexing interface being damaged is thereby reduced.

The indexing interface is configured to interact with an indexing tool such as an Allen key or a screwdriver, which is inserted in the indexing interface via the channel. The usage of an indexing interface in combination with an indexing tool facilitates the generation of a rotation force big enough to overcome the biasing force generated by the resilient element. Thereby, the indexing process of the cutting edge is facilitated.

The channel is preferably a straight channel extending from the second opening located at the bottom support surface to the first opening located at a peripheral side surface of the toolholder body straight below the bottom support surface.

According to an embodiment, the indexing interface is an Allen key interface.

By providing the indexing interface as an Allen key interface, a standard Allen key can be used as the indexing tool.

According to an embodiment, the cutting insert comprises an insert top surface, an insert bottom surface, and an insert side surface connecting the insert top surface and the insert bottom surface, and wherein the cutting unit further comprises a shim, wherein the shim comprises a shim top surface, a shim bottom surface and a shim side surface connecting the shim top surface and the shim bottom surface, wherein the shim top surface is arranged in contact with the insert bottom surface, and wherein the cutting insert and the shim are rotationally fixed relative each other.

By providing a shim arranged in the cutting unit, the risk of damaging the toolholder body during operation of the cutting tool is reduced. By having the cutting insert and the shim rotationally fixed relative each other, it is possible to indirectly rotate the cutting insert by rotating the shim. Due to this, features facilitating the indexation process, such as an indexing interface described above, can be arranged in the shim instead of the cutting insert. This is especially beneficial if the cutting insert is made from a harder material than the shim since the manufacturing of the cutting unit is facilitated.

The shim is preferable manufactured from a harder material than the toolholder body, such as cemented carbide. As a result of this, the risk of the shim being damaged is reduced while the total weight of the cutting tool can be kept at a minimum.

According to an embodiment, the shim is manufactured from a softer material than the cutting insert. The cutting insert could e.g. be made of cubic boron nitride (CBN) and the shim could be made of e.g. cemented carbide.

According to an embodiment, the insert bottom surface comprises at least one insert support element, wherein the at least one insert support element being any of:

- an indention in the insert bottom surface; or

- a protrusion extending from the insert bottom surface toward the shim top surface, and wherein

the shim top surface comprises at least one shim support element, wherein the at least one shim support element being any of:

- a protrusion engaging with the indention in the insert bottom surface; or

- an indention engaging with the protrusion at the insert bottom surface.

With this arrangement, the risk of unintentional rotation between the shim and the cutting insert is reduced due to the increased friction between the shim top surface and the cutting insert bottom surface.

According to an embodiment, the at least one shim support element extends a distance $l_1$ away from the shim top surface in the direction of the central axis A, and wherein the at least one indexing indication element extends a distance $l_2$ from the clamping surface or from the bottom support surface in the direction of the central axis A, wherein $l_1 > l_2$.

By having the distance $l_1$ being longer than the distance $l_2$, the risk of unintentional rotation between the shim and the cutting insert is reduced since the friction between the shim and the cutting insert will become larger than the friction between the cutting unit and the clamp or toolholder body.

According to an embodiment, the number of shim support elements is higher than the number of indexing indication elements.

By having the number of shim support elements being higher than the number of indexing indication elements, the risk of unintentional rotation between the shim and the cutting insert is reduced since the friction between the shim and the cutting insert will become larger than the friction between the cutting unit and the clamp or toolholder body.

According to an embodiment, the bottom support surface is located in a plane Q, wherein the plane Q is normal to the central axis A, and wherein the toolholder body comprises a first marking, wherein an extension of the first marking in the direction of the central axis A intersects the plane Q, and wherein the cutting unit further comprises a cutting unit side surface connecting the cutting unit top surface and the cutting unit bottom surface, wherein the cutting unit side surface comprises a second marking, wherein an extension of the second marking in the direction of the central axis A intersects the plane Q.

Due to this arrangement, the extensions of the first and second markings will, at one position in the circumferential direction around the central axis A, coincide with each other. By determining the relative distance between the extensions of the first and second markings, the operator can determine how many more times the cutting edge can be indexed before a new cutting insert needs to be provided. Preferably, when a new cutting insert is provided in the cutting tool, the first and second markings are aligned so that their respective extension coincide with each other. The cutting edge can then be indexed until the first and second markings are aligned again. Then, all cutting edge portions have been used and a new cutting insert needs to be provided. The risk of a non-optimum usage of the cutting edge is thereby reduced.

According to an embodiment, the clamp comprises a clamp bottom surface facing the toolholder body, and an opposite clamp top surface, wherein the clamping surface is arranged at the clamp bottom surface, wherein the clamp has a longitudinal axis B extending from a rear end surface to a front end surface, wherein the front end surface is located closer to the cutting unit than the rear end surface, wherein the clamp comprises a through hole extending from the clamp top surface to the clamp bottom surface, wherein the through hole is located between the front end surface and the rear end surface in the direction of the longitudinal axis B, wherein the fastening element extends through the through hole, and wherein the resilient element is arranged between the toolholder body and the clamp bottom surface, wherein the resilient element contacts the clamp bottom surface between the rear end surface and the through hole in the direction of the longitudinal axis B.

Due to this arrangement, the biasing force generated by the resilient element will cause a pivoting movement of the clamp, pressing the clamping surface towards the cutting unit top surface.

According to an embodiment, the cutting insert is a double sided cutting insert having a cutting insert top surface, a cutting insert bottom surface, and a cutting insert side surface connecting the cutting insert top surface and the cutting insert bottom surface, wherein the insert bottom surface is identical to the insert top surface.

By arranging the cutting insert as a double sided cutting insert as described above, the number of available cutting edge portions at the cutting insert will be doubled, resulting in an improved lifetime of the cutting insert.

The object of the present invention is further achieved by a method for indexing the cutting edge in the cutting tool described above, wherein the method comprises the steps of:

- bringing the cutting tool to the indexing state by loosening the fastening element;

- rotating the cutting unit a distance d in the circumferential direction around the central axis A; and

- bringing the cutting tool to the operation state by fastening the fastening element.

By rotating the cutting unit a distance d in the circumferential direction around the central axis A, the cutting edge is indexed an optimum amount. Due to the arrangement of the resilient element, a clear indication is given to the operator when the cutting unit has been rotated a distance d, as described above.

According to an embodiment, the method further comprises the steps of:

- before rotating the cutting unit a distance d in the circumferential direction around the central axis A, inserting an indexing tool into the indexing interface via the channel; and

- after rotating the cutting unit a distance d in the circumferential direction around the central axis A, removing the indexing tool from the indexing interface, wherein the step of rotating the cutting unit a distance d in the circumferential direction around the central axis A is performed by rotating the indexing tool.

According to an embodiment, the indexing tool is an Allen key.

According to an embodiment, the method steps described above are repeated n-1 times.

By repeating the steps n-1 times all available cutting edge portions of the cutting edge will be used. A maximum usage of the cutting edge is thereby achieved.

BRIEF DESCRIPTION OF THE DRAWINGS

Figure 1 schematically illustrates a perspective view of a cutting tool according to the invention.

Figure 2 schematically illustrates a bottom view of the cutting tool illustrated in figure 1.

Figure 3 schematically illustrates the cutting unit being part of the cutting tool illustrated in figure 1.

Figure 4 schematically illustrates a bottom view of the cutting unit illustrated in figure 3.

Figure 5 schematically illustrates a top view of the cutting insert being part of the cutting unit as illustrated in figure 3.

Figure 6 schematically illustrates a bottom view of the cutting insert being part of the cutting unit as illustrated in figure 3.

Figure 7 schematically illustrates a top perspective view of the pocket being part of the cutting tool illustrated in figure 1.

Figure 8 schematically illustrates a bottom perspective view of the pocket being part of the cutting tool illustrated in figure 1.

Figure 9 schematically illustrates a flow chart of example method steps for indexing the cutting edge in the cutting tool illustrated in figure 1.

DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that the disclosure will be thorough and complete, and will fully convey the scope of the invention to those skilled in the art. Like reference numbers refer to like elements throughout. The elements illustrated in the drawings are not necessary according to scale. Some elements might have been enlarged in order to clearly illustrate those elements.

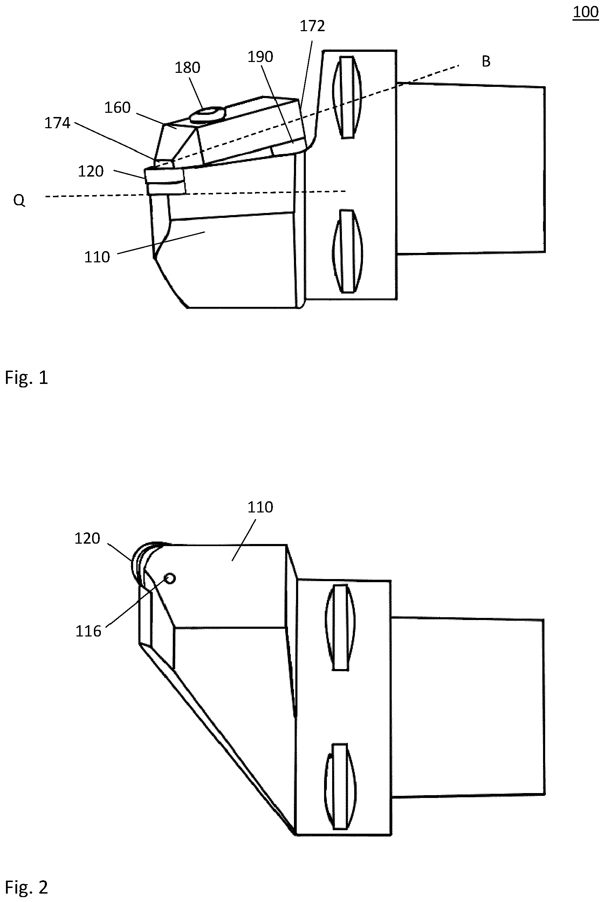

Figure 1 schematically illustrates a perspective view of a cutting tool (100) according to the invention. The cutting tool (100) comprises

-  a toolholder body (110);

-  a cutting unit (120);

-  a clamp (160); and

-  a fastening element (180), wherein

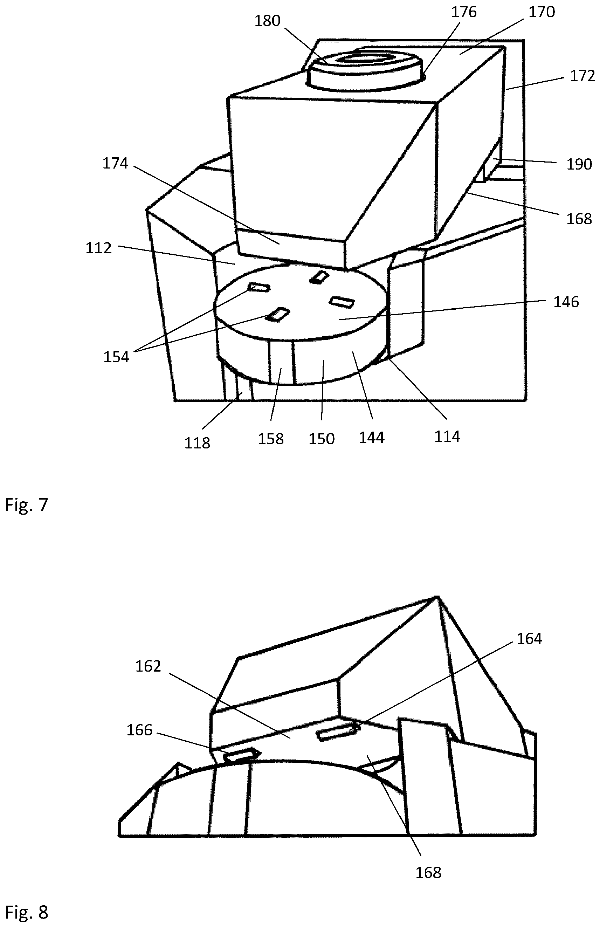

the toolholder body (110) comprising a pocket (112) having a bottom support surface (114), c.f. figure 7, and wherein the clamp (160) is arranged at the toolholder body (110) and extending at least partly over the pocket (112), wherein the cutting unit (120) is secured in the pocket (112) by the fastening element (180) which is adjustable to generate a clamping force acting on the clamp (160) to press the clamping surface (162) toward the cutting unit (120), wherein the cutting tool (100) is configured to be shifted between an operation state and an indexing state by adjusting the fastening element (180) to provide a corresponding clamping force, wherein the cutting tool (100) further comprises a resilient element (190) connecting the clamp (160) with the toolholder body (110), wherein the resilient element (190) is configured to generate a biasing force acting on the clamp (160) to press the clamping surface (162) towards the cutting unit (120), wherein

-  in the operation state, the clamping force is larger than the biasing force,

-  in the indexing state, the clamping force is smaller than the biasing force.

The bottom support surface (114) is arranged in a plane Q. The clamp (160) has a longitudinal axis B extending from a rear end surface (172) to a front end surface (174), wherein the front end surface (174) is located closer to the cutting unit (120) than the rear end surface (172).

Figure 2 schematically illustrates a bottom view of the cutting tool (100) illustrated in figure 1. The cutting tool (100) further comprises a channel (not illustrated) extending from a first opening (116) at a peripheral surface of the toolholder body (110) to a second opening (not illustrated) located at the bottom support surface (114).

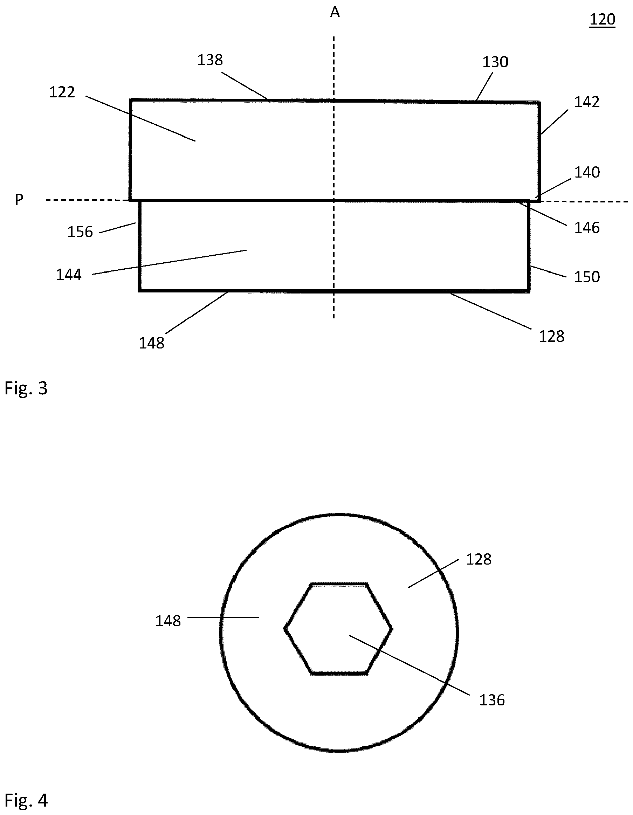

Figure 3 schematically illustrates the cutting unit (120) being part of the cutting tool (100) illustrated in figure 1. The cutting unit (120) comprises a cutting insert (122) and a shim (144), wherein the cutting insert (122) comprises an insert top surface (138), an insert bottom surface (140), and an insert side surface (142) connecting the insert top surface (138) and the insert bottom surface (140), wherein the shim (144) comprises a shim top surface (146), a shim bottom surface (148) and a shim side surface (150) connecting the shim top surface (146) and the shim bottom surface (148), wherein the shim top surface (146) is arranged in contact with the insert bottom surface (140), and wherein the cutting insert (122) and the shim (144) are rotationally fixed relative each other. The cutting unit (120) comprises a cutting unit bottom surface (128), a cutting unit top surface (130), and a cutting unit side surface (156) connecting the cutting unit bottom surface (128) and the cutting unit top surface (130). The shim bottom surface (148) constitutes the cutting unit bottom surface (128), and the insert top surface (138) constitutes the cutting unit top surface (130). The shim side surface (150) together with the insert side surface (142) constitutes the cutting unit side surface (156). The cutting unit (120) comprises a central plane P extending midway between the cutting unit top surface (130) and the cutting unit bottom surface (128), and wherein the cutting unit (120) comprises a central axis A extending between the cutting unit top surface (130) and the cutting unit bottom surface (128) normal to the central plane P.

Figure 4 schematically illustrates a bottom view of the cutting unit (120) illustrated in figure 3. The cutting unit bottom surface (128) comprises an indexing interface (136) in form of an Allen key interface.

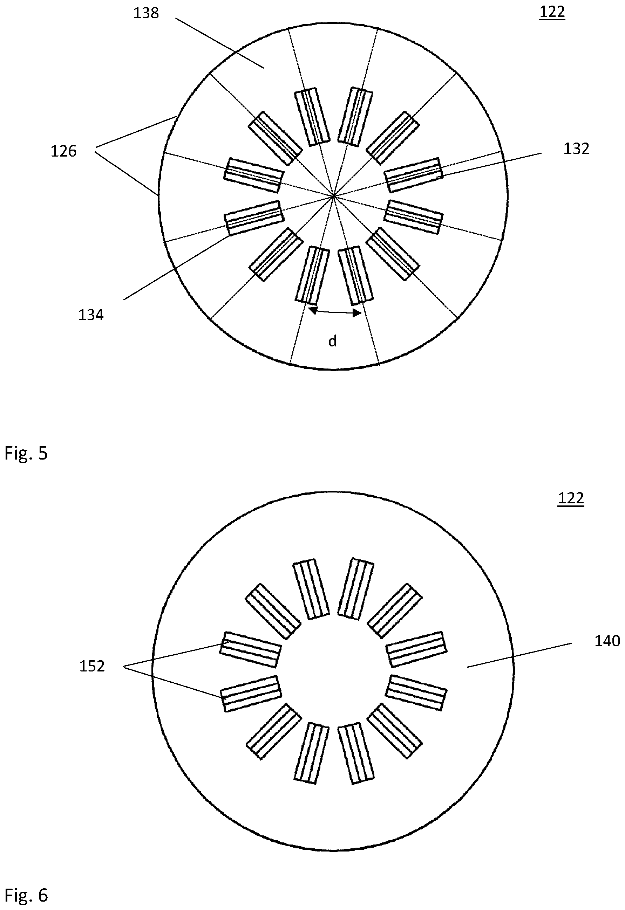

Figure 5 schematically illustrates a top view of the cutting insert (122) being part of the cutting unit (120) as illustrated in figure 3. The cutting insert (122) comprises a circular cutting edge (124) comprising twelve cutting edge portions (126). The insert top surface (138) comprises a plurality of cutting unit indexing elements (132,134) in form of twelve recesses in the insert top surface (138), wherein the distance between two neighboring recesses in the cutting unit top surface (130) is d in a circumferential direction around the central axis A. The cutting unit indexing elements (132,134) are configured to engage with the indexing indication elements (164,166), c.f. figure 8.

Figure 6 schematically illustrates a bottom view of the cutting insert (122) being part of the cutting unit (120) as illustrated in figure 3. The insert bottom surface (140) comprises a plurality of insert support elements (152) in form of twelve recesses in the insert bottom surface. The insert support elements (152) are configured to engage with the shim support elements (154) arranged in the shim top surface (146), c.f. figure 7. The cutting insert (122) is a double sided cutting insert, wherein the insert bottom surface (140) is identical to the insert top surface (138).

Figure 7 schematically illustrates a top perspective view of the pocket (112) being part of the cutting tool (100) illustrated in figure 1. The toolholder body (110) comprising a pocket (112) having a bottom support surface (114). The shim bottom surface (148) facing the bottom support surface (114). The shim top surface (146) comprises a plurality of shim support elements (154), which are configured to engage with the insert support elements (152) in the insert bottom surface (140). The toolholder body (110) comprises a first marking (118), wherein an extension of the first marking (118) in the direction of the central axis A intersects the plane Q. The shim side surface (150) comprises a second marking (158), wherein an extension of the second marking (158) in the direction of the central axis A intersects the plane Q. The clamp (160) comprises a clamp bottom surface (168) facing the toolholder body (110), and an opposite clamp top surface (170), wherein the clamping surface (162) is arranged at the clamp bottom surface (168), c.f. figure 8, wherein the clamp (160) comprises a through hole (176) extending from the clamp top surface (170) to the clamp bottom surface (168), wherein the through hole (176) is located between the front end surface (174) and the rear end surface (172) in the direction of the longitudinal axis B, wherein the fastening element (180) extends through the through hole (176), and wherein the resilient element (190) is arranged between the toolholder body (110) and the clamp bottom surface (168), wherein the resilient element (190) contacts the clamp bottom surface (168) between the rear end surface (172) and the through hole (176) in the direction of the longitudinal axis B.

Figure 8 schematically illustrates a bottom perspective view of the pocket (112) being part of the cutting tool (100) illustrated in figure 1. The clamp (160) comprises a plurality of indexing indication elements (164,166) in form of two protrusions extending from the clamping surface (162) in the direction towards the cutting unit (120). The indexing indication elements (164,166) are configured to engage with the cutting unit indexing elements (132,134), c.f. figure 5.

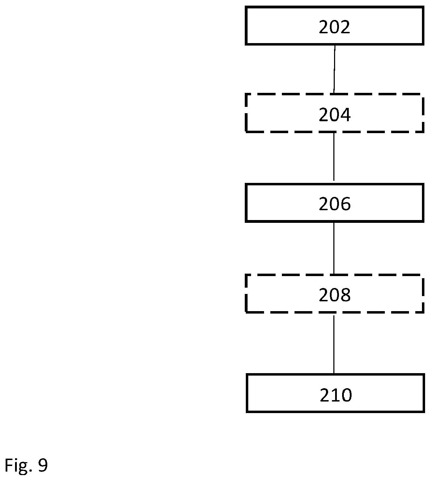

Figure 9 schematically illustrates a flow chart of example method (200) steps for indexing the cutting edge (124) in the cutting tool illustrated in figure 1. The method (200) comprises the steps of:

- bringing the cutting tool (100) to the indexing state by loosening (202) the fastening element (180);

- rotating (206) the cutting unit (120) a distance d in the circumferential direction around the central axis A; and

- bringing the cutting tool (100) to the operating state by fastening (210) the fastening element (180).

Optionally, the method (200) further comprises the steps of:

- before step (206), inserting (204) an indexing tool into the indexing interface (136) via the channel; and

- after step (206), removing (208) the indexing tool from the indexing interface (136), wherein step (206) is performed by rotating the indexing tool.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein by reference and are intended to be encompassed hereby. Moreover, it is not necessary for an apparatus or method to address each and every problem sought to be solved by the presently described concept, for it to be encompassed hereby.

**Claims**

1. A cutting tool (100) comprising:

   - a toolholder body (110);
   - a cutting unit (120);
   - a clamp (160); and
   - a fastening element (180), wherein

      the toolholder body (110) comprising a pocket (112) having a bottom support surface (114), and wherein
      the clamp (160) is arranged at the toolholder body (110) and extending at least partly over the pocket (112), wherein the clamp (160) comprises a clamping surface (162) facing the pocket (112), and wherein
      the cutting unit (120) comprises a cutting insert (122) having a circular cutting edge (124) comprising a plurality of cutting edge portions (126), wherein
      the cutting unit (120) is arranged in the pocket (112), wherein the cutting unit (120) comprises:

   - a cutting unit bottom surface (128) facing the bottom support surface (114); and
   - a cutting unit top surface (130) facing the clamping surface (162), wherein

      the cutting unit (120) comprises a central plane P extending midway between the cutting unit top surface (130) and the cutting unit bottom surface (128), and wherein the cutting unit (120) comprises a central axis A extending between the cutting unit top surface (130) and the cutting unit bottom surface (128) normal to the central plane P, wherein
      the cutting tool (100) further comprises at least one indexing indication element (164,166) in form of a protrusion extending toward the cutting unit (120) from

   - the clamping surface (162); or
   - the bottom support surface (114), and wherein the cutting unit (120) comprises a plurality of cutting unit indexing elements (132,134), wherein the cutting unit indexing elements (132,134) are in the form of
   - n recesses arranged in the cutting unit top surface (130); or
   - n recesses arranged in the cutting unit bottom surface (128), wherein

      the distance between two neighboring recesses in the cutting unit top surface (130) or in the cutting unit bottom surface (128) is d in a circumferential direction around the central axis A, wherein n is an integer $\geq 2$, wherein
      each of the at least one indexing indication element (164,166) is in engagement with one of the cutting unit indexing elements (132,134), wherein
      the cutting unit (120) is secured in the pocket (112) by the fastening element (180) which is adjustable to generate a clamping force acting on the clamp (160) to press the clamping surface (162) toward the cutting unit (120), wherein
      the cutting tool (100) is configured to be shifted between an operation state and an indexing state by adjusting the fastening element (180) to provide a corresponding clamping force, wherein

   - in the operation state, the cutting unit (120) is immovably secured in the pocket (112),
   - in the indexing state, the cutting unit (120) is secured in the pocket (112) such that the cutting unit (120) is rotatable relative the bottom support surface (114) in the circumferential direction around the central axis A such that another one of the cutting unit indexing elements (132,134) can be brought into engagement with the at least one indexing indication element (164,166) for allowing indexing of the cutting edge portions (126),

   **characterized in that**
   the cutting tool (100) further comprises a resilient element (190) connecting the clamp (160) with the toolholder body (110), wherein the resilient element (190) is configured to generate a biasing force acting on the clamp (160) to press the clamping surface (162) towards the cutting unit top surface (130), wherein

   - in the operation state, the clamping force is larger than the biasing force,
   - in the indexing state, the clamping force is smaller than the biasing force.

2. The cutting tool (100) according to claim 1, wherein the cutting tool (100) comprises a first indexing indication element (164) and a second indexing indication element (166) extending towards the cutting unit (120) from

      - the clamping surface (162), or

- the bottom support surface (114), wherein the first indexing indication element (164) is configured to engage a first of the n recesses (132), and wherein the second indexing indication element (166) is configured to engage a second of the n recesses (134).

3. The cutting tool according to claim 2, wherein the cutting unit top surface (130) or the cutting unit bottom surface (128) comprises m recesses arranged between the first recess (132) and the second recess (134) in the circumferential direction around the central axis A, wherein

$$m = \frac{n-2}{2}$$ .

4. The cutting tool (100) according to any of the preceding claims, wherein the cutting unit bottom surface (128) comprises an indexing interface (136), and wherein the toolholder body (110) comprises a channel extending from a first opening (116) at a peripheral surface of the toolholder body (110) to a second opening located at the bottom support surface (114), wherein the indexing interface (136) is accessible from the exterior of the cutting tool (100) via the channel.

5. The cutting tool (100) according to claim 4, wherein the indexing interface (136) is an Allen key interface.

6. The cutting tool (100) according to any of the preceding claims, wherein the cutting insert (122) comprises an insert top surface (138), an insert bottom surface (140), and an insert side surface (142) connecting the insert top surface (138) and the insert bottom surface (140), and wherein the cutting unit (120) further comprises a shim (144), wherein the shim (144) comprises a shim top surface (146), a shim bottom surface (148) and a shim side surface (150) connecting the shim top surface (146) and the shim bottom surface (148), wherein the shim top surface (146) is arranged in contact with the insert bottom surface (140), and wherein the cutting insert (122) and the shim (144) are rotationally fixed relative each other.

7. The cutting tool (100) according to claim 6, wherein the insert bottom surface (140) comprises at least one insert support element (152), wherein the at least one insert support element (152) being any of:

- an indention in the insert bottom surface (140); or
- a protrusion extending from the insert bottom surface (140) toward the shim top surface (146), and wherein the shim top surface (146) comprises at least one shim support element (154), wherein the at least one shim support element (154) being any of:
- a protrusion engaging with the indention in the insert bottom surface (140); or
- an indention engaging with the protrusion at the insert bottom surface (140).

8. The cutting tool (100) according to claim 7, wherein the at least one shim support element (154) extends a distance $l_1$ away from the shim top surface (146) in the direction of the central axis A, and wherein the at least one indexing indication element (164,166) extends a distance $l_2$ from the clamping surface (162) or from the bottom support surface (114) in the direction of the central axis A, wherein $l_1 > b$.

9. The cutting tool (100) according to claim 7 or 8, wherein the number of shim support elements (154) is higher than the number of indexing indication elements (164,166).

10. The cutting tool (100) according to any of the preceding claims, wherein the bottom support surface (114) is located in a plane Q, wherein the plane Q is normal to the central axis A, and wherein the toolholder body (110) comprises a first marking (118), wherein an extension of the first marking (118) in the direction of the central axis A intersects the plane Q, and wherein the cutting unit (120) further comprises a cutting unit side surface (156) connecting the cutting unit top surface (130) and the cutting unit bottom surface (128), wherein the cutting unit side surface (156) comprises a second marking (158), wherein an extension of the second marking (158) in the direction of the central axis A intersects the plane Q.

11. The cutting tool (100) according to any of the preceding claims, wherein the clamp (160) comprises a clamp bottom surface (168) facing the toolholder body (110), and an opposite clamp top surface (170), wherein the clamping surface (162) is arranged at the clamp bottom surface (168), wherein the clamp (160) has a longitudinal axis B extending from a rear end surface (172) to a front end surface (174), wherein the front end surface (174) is located closer to the cutting unit (120) than the rear end surface (172), wherein the clamp (160) comprises a through hole (176) extending from the clamp top surface (170) to the clamp bottom surface (168), wherein the through hole (176) is located between the front end surface (174) and the rear end surface (172) in the direction of the longitudinal axis B, wherein the fastening element (180) extends through the through hole (176), and wherein the resilient element (190) is arranged between the toolholder body (110) and the clamp bottom surface (168), wherein the resilient element (190) contacts the clamp bottom surface (168) between the rear end surface (172) and the through hole (176) in the direction of the longitudinal axis B.

12. The cutting tool (100) according to any of the preceding claims, wherein the cutting insert (122) is a double sided cutting insert having a cutting insert top surface (138), a cutting insert bottom surface (140), and a cutting insert side surface (142) connecting the cutting insert top surface (138) and the cutting insert bottom surface (140), wherein the insert bottom surface (140) is identical to the insert top surface (138).

13. Method (200) for indexing the cutting edge (124) in the cutting tool (100) according to any of claims 1-12, wherein the method (200) comprises the steps of:

- bringing the cutting tool (100) to the indexing state by loosening (202) the fastening element (180);
- rotating (206) the cutting unit (120) a distance d in the circumferential direction around the central axis A; and
- bringing the cutting tool (100) to the operation state by fastening (210) the fastening element (180).

14. The method (200) according to claim 13, wherein the cutting tool (100) comprises the features of claim 4, wherein the method (200) further comprises the steps of:

- before step (206), inserting (204) an indexing tool into the indexing interface (136) via the channel; and
- after step (206), removing (208) the indexing tool from the indexing interface (136), wherein step (206) is performed by rotating the indexing tool.

15. The method (200) according to claim 13 or 14, wherein the steps (202)-(210) are repeated n-1 times.

100

172

190

180

160

174

120

Q

110

B

Fig. 1

110

120

116

Fig. 2

120

A

138     130

122                              142

                                 140

P                                146

156                              150

144

148      128

Fig. 3

128

148      136

Fig. 4

Fig. 5

Fig. 6

Fig. 7

Fig. 8

```
┌─────────────────┐
│       202       │
└─────────────────┘
         │
┌ ─ ─ ─ ─ ─ ─ ─ ─ ┐
        204
└ ─ ─ ─ ─ ─ ─ ─ ─ ┘
         │
┌─────────────────┐
│       206       │
└─────────────────┘
         │
┌ ─ ─ ─ ─ ─ ─ ─ ─ ┐
        208
└ ─ ─ ─ ─ ─ ─ ─ ─ ┘
         │
┌─────────────────┐
│       210       │
└─────────────────┘
```

Fig. 9

Europäisches
Patentamt

European
Patent Office

Office européen
des brevets

# EUROPEAN SEARCH REPORT

Application Number

EP 22 20 0705

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DE 10 2009 049088 A1 (MAPAL FAB PRAEZISION [DE]) 7 April 2011 (2011-04-07) * paragraphs [0025], [0026], [0033], [0034]; figures 1,2,3,4 * | 1-15 | INV. B23B27/16 |
| Y | US 2013/051941 A1 (BEN AMOR RAOUF [DE] ET AL) 28 February 2013 (2013-02-28) * paragraph [0031] - paragraph [0039]; figures 1-5 * | 1-15 | |
| Y | JP 2009 131915 A (KYOCERA CORP) 18 June 2009 (2009-06-18) * abstract; figures 2,3,4, * | 1-15 | |
| Y | GB 1 191 063 A (ROLLS ROYCE) 6 May 1970 (1970-05-06) * page 1, line 70 - line 90; figure 2 * | 1-15 | |
| Y | US 2014/356085 A1 (CANELA VINAS ALEXANDRE [ES]) 4 December 2014 (2014-12-04) * paragraph [0019] - paragraph [0030]; figure 4 * | 1-15 | TECHNICAL FIELDS SEARCHED (IPC) |
| A | US 2014/086694 A1 (FANG X DANIEL [US] ET AL) 27 March 2014 (2014-03-27) * paragraph [0073]; figure 15 * | 1,10 | B23B |

The present search report has been drawn up for all claims

| Place of search | Date of completion of the search | Examiner |
|---|---|---|
| The Hague | 22 March 2023 | Prelovac, Jovanka |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 20 0705

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2023

| Patent document cited in search report | Publication date | Patent family member(s) | Publication date |
|---|---|---|---|
| DE 102009049088 A1 | 07-04-2011 | NONE | |
| US 2013051941 A1 | 28-02-2013 | CN 102781610 A | 14-11-2012 |
| | | DE 102010063849 A1 | 30-06-2011 |
| | | EP 2516088 A1 | 31-10-2012 |
| | | US 2013051941 A1 | 28-02-2013 |
| | | WO 2011076835 A1 | 30-06-2011 |
| JP 2009131915 A | 18-06-2009 | NONE | |
| GB 1191063 A | 06-05-1970 | NONE | |
| US 2014356085 A1 | 04-12-2014 | NONE | |
| US 2014086694 A1 | 27-03-2014 | CN 104582884 A | 29-04-2015 |
| | | CN 106862627 A | 20-06-2017 |
| | | DE 112013004699 T5 | 09-07-2015 |
| | | SE 1550336 A1 | 20-03-2015 |
| | | US 2014086694 A1 | 27-03-2014 |
| | | WO 2014052118 A1 | 03-04-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102009049088 A1